(19)

Europäisches
Patentamt
European
Patent Office
Office européen
des brevets

(11)  **EP 4 571 355 A1**

(12)  # EUROPEAN PATENT APPLICATION

(43) Date of publication:
**18.06.2025 Bulletin 2025/25**

(21) Application number: **24218288.9**

(22) Date of filing: **09.12.2024**

(51) International Patent Classification (IPC):
***G01S 7/487*** (2006.01)   ***G01S 17/89*** (2020.01)
***G01S 17/931*** (2020.01)   ***G06N 3/08*** (2023.01)

(52) Cooperative Patent Classification (CPC):
**G01S 17/931; G01S 7/487; G01S 17/89;
G06N 3/045; G06N 3/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.12.2023 KR 20230180503
22.11.2024 KR 20240168624**

(71) Applicant: **Electronics and Telecommunications
Research Institute
Daejeon 34129 (KR)**

(72) Inventors:
• **Han, Seung Jun
34129 Daejeon (KR)**
• **Min, Kyoung-Wook
34129 Daejeon (KR)**
• **Lee, Dong-Jin
34129 Daejeon (KR)**
• **Choi, Jeong Dan
34129 Daejeon (KR)**

(74) Representative: **Betten & Resch
Patent- und Rechtsanwälte PartGmbB
Maximiliansplatz 14
80333 München (DE)**

(54)  **SYSTEM FOR ELIMINATING LIDAR SENSOR NOISE CAUSED BY ADVERSE WEATHER
ENVIRONMENT AND OPERATING METHOD THEREOF**

(57)     The present invention relates to a system for eliminating noise of a LiDAR sensor caused by an adverse weather environment and an operating method thereof. An operating method of a light detection and ranging (LiDAR) sensor noise elimination system includes receiving a first point cloud containing noise from a LiDAR sensor, generating a two-dimensional first range image and a two-dimensional first reflectance image based on the first point cloud, generating a two-dimensional first noise region boundary image by inputting the first range image and the first reflectance image into a pre-trained machine learning model, and eliminating noise contained in the first point cloud using the first noise region boundary image.

FIG. 1

# EP 4 571 355 A1

**Description**

CROSS-REFERENCE TO RELATED APPLICATION

This application claims priority to and the benefit of Korean Patent Application No. 10-2023-0180503, filed on December 13, 2023, and Korean Patent Application No. 10-2024-0168624, filed on November 22, 2024, the disclosures of which are incorporated herein by reference in their entirety.

BACKGROUND

## 1. Field of the Invention

The present invention relates to a method of effectively eliminating noise generated in a light detection and ranging (LiDAR) sensor, which is a core component of an autonomous vehicle, under adverse weather conditions, and a system for performing the same.

Specifically, under adverse weather conditions such as snow, rain, and fog, a large amount of fine floating particles is generated in the atmosphere, and these fine floating particles interfere with a path of a laser beam of the LiDAR sensor and cause noise. The present invention relates to a LiDAR sensor noise elimination system that effectively eliminates such noise and an operating method thereof.

## 2. Discussion of Related Art

A method of eliminating noise from a vehicle LiDAR sensor may be broadly divided into a statistical approach method and a method using learning.

The statistical approach method is a method that utilizes statistical characteristics of the distribution of point clouds. Examples of a representative statistical approach method include a Dynamic Radius Outlier Removal (DROR, [1]) method and a Dynamic Statistical Outlier Removal (DSOR, [2]) method.

DROR is the first research result in this field and is based on the number of adjacent points of each point. DROR constructs a K-d tree and determines outliers based on the number of adjacent points obtained using a dynamic search radius, utilizing the characteristics that the density of target points is inversely proportional to the distance. The search radius of each point is dynamically adjusted according to the distance.

DSOR also relies on the nearest adjacent point search but calculates the mean and variance of the relative distances based on the fixed number of adjacent points for each point. That is, DSOR estimates the local density around each point and filters noise based on this.

WeatherNet ([3]) is the most representative algorithm as the method using learning. WeatherNet used a LiDAR-based semantic segmentation method to reduce point cloud noise under different weather conditions and construct training data to generate a semantic segmentation network.

4DenoiseNet ([4]) presented a noise classification method using temporally continuous point cloud data and a semantic segmentation network. In 4DenoiseNet, a significant amount of virtual synthetic data is used to train the semantic segmentation network.

Examples of the related art include the following patent documents and non-patent documents.

Patent document 1: Korean Laid-open Patent Publication No. 10-2022-0122392 (Publication Date: September 2, 2022)
Patent document 2: of Korean Registered Patent Publication No. 10-2507068 (Registration Date: March 2, 2023)
Non-patent document 1: Charron, Nicholas, Stephen Phillips, and Steven L. Waslander. "De-noising of LiDAR point clouds corrupted by snowfall." 2018 15th Conference on Computer and Robot Vision (CRV). IEEE, 2018.
Non-patent document 2: Kurup, Akhil, and Jeremy Bos. "Dsor: A scalable statistical filter for eliminating falling snow from LiDAR point clouds in severe winter weather." arXiv preprint arXiv:2109.07078 (2021).
Non-patent document 3: Heinzler, Robin, et al. "Cnn-based LiDAR point cloud de-noising in adverse weather." IEEE Robotics and Automation Letters 5.2 (2020): 2514-2521.
Non-patent document 4: Seppanen, Alvari, Risto Ojala, and Kari Tammi. "4denoisenet: Adverse weather denoising from adjacent point clouds." IEEE Robotics and Automation Letters 8.1 (2022): 456-463.

SUMMARY OF THE INVENTION

A light detection and ranging (LiDAR) sensor is a sensor that measures a distance to an object using a time difference between transmission and reception of a laser beam and is the most representative sensor recently used in autonomous vehicles. The LiDAR sensor generates a three-dimensional point cloud using the distance of an object and a launch angle of a laser beam. However, under adverse weather conditions, fine floating particles in the air such as rain, snow, and fog interfere with the laser beam, thereby causing noise and significantly reducing the quality of the point cloud.

The present invention is directed to providing a LiDAR sensor noise elimination system and an operating method thereof capable of determining whether each point of a point cloud measured from a LiDAR sensor is noise caused by fine floating particles or an actual object and eliminating noise to provide a clear point cloud to a recognition system of an autonomous vehicle.

In addition, a technology for eliminating noise is a technology corresponding to preprocessing in the recognition system of the autonomous vehicle, and the present invention is also directed to implementing a technology for quick operation with fewer resources in order to provide more system resources to core technologies of autonomous driving. The present invention is ultimately directed to enabling autonomous vehicles to drive more safely under adverse weather conditions through the present invention.

The object of the present invention is not limited to the objects mentioned above, and other objects that are not mentioned will be clearly understood by those skilled in the art from the description below.

According to a first embodiment of the present invention, there is provided an operating method of a LiDAR sensor noise elimination system, which includes receiving, by the system, a first point cloud containing noise from a LiDAR sensor, generating, by the system, a two-dimensional first range image and a two-dimensional first reflectance image based on the first point cloud, generating, by the system, a two-dimensional first noise region boundary image by inputting the first range image and the first reflectance image into a pre-trained machine learning model, and eliminating, by the system, noise contained in the first point cloud using the first noise region boundary image.

In the first embodiment of the present invention, the generating of the two-dimensional first range image and the two-dimensional first reflectance image may include estimating, by the system, reflectance of each point contained in the first point cloud using an impulse response of a single beam output of the LiDAR sensor, coordinates of the first point cloud, and adaptive parameters reflecting a backscattering effect and generating the first reflectance image based on the reflectance.

In the first embodiment of the present invention, the generating of the two-dimensional first range image and the two-dimensional first reflectance image may include increasing, by the system, reflectance of a point whose z coordinate is a negative number among the first point cloud by applying a predetermined weight to the reflectance.

The first embodiment of the present invention may further include generating, by the system, a second range image and a second reflectance image based on a previously collected second point cloud in which a noise label is assigned to a noise point, generating, by the system, a third range image by eliminating the noise point assigned the noise label from the second range image, and generating a second noise region boundary image by multiplying the third range image by a constant of 1 or less, and training, by the system, the machine learning model using the second range image, the second reflectance image, and the second noise region boundary image as training data.

In the first embodiment of the present invention, the generating of the second noise region boundary image may further include correcting, by the system, the second noise region boundary image when a noise point whose distance is greater than that of a noise boundary region shown in the second noise region boundary image is present so that a distance of a point of the noise boundary region corresponding to the noise point whose distance is greater than that of the noise boundary region becomes greater than that of the noise point whose distance is greater than that of the noise boundary region.

In the first embodiment of the present invention, the generating of the second noise region boundary image may include performing, by the system, edge-preserving smoothing on the second noise region boundary image.

In the first embodiment of the present invention, the machine learning model may be a generative model.

In the first embodiment of the present invention, the training of the machine learning model may include training, by the system, an encoder included in the machine learning model using the second range image and the second reflectance image as training data, and training, by the system, a decoder included in the machine learning model by fixing the trained encoder and using the second range image, the second reflectance image, and the second noise region boundary image as training data.

In the first embodiment of the present invention, the training of the decoder may include calculating, by the system, a reconstruction loss between an output of the decoder and the second noise region boundary image and training the decoder so that the reconstruction loss is reduced.

The first embodiment of the present invention may further include generating, by the system, the noise point and the noise label assigned to the noise point using a pre-built weather simulator.

In the first embodiment of the present invention, the weather simulator may include any one of LiDAR light scattering augmentation (LISA), LiDAR snowfall simulation (SnowSim), and Fog simulation on real LiDAR point clouds (FogSim), or a combination thereof.

According to a second embodiment of the present invention, there is provided an operating method of a LiDAR sensor noise elimination system including a training method of a machine learning model by the LiDAR sensor noise elimination system so that the machine learning model generates a noise region boundary image used to select noise contained in a point cloud generated by a LiDAR sensor. The training method of the machine learning model includes generating, by the system, a second range image and a second reflectance image based on a previously collected second point cloud in which a noise label is assigned to a noise point, generating, by the system, a third range image by eliminating the noise point assigned the noise label from the second range image, and generating a second noise region boundary image by multiplying the third range image by a constant of 1 or less, and training, by the system, the machine learning model using the second range image, the second reflectance image, and the second noise region boundary image as training data.

In the second embodiment of the present invention, the generating of the second noise region boundary image may further include correcting, by the system, the second noise region boundary image when a noise point whose distance is greater than that of a noise boundary region shown in the second noise region boundary image is present so that a distance of a point of the noise boundary region corresponding to the noise point whose distance is greater than that of the noise boundary region becomes greater than that of the noise point whose distance is greater than that of the noise boundary region.

In the second embodiment of the present invention, the generating of the second noise region boundary image may include performing, by the system, edge-preserving smoothing on the second noise region boundary image.

In the second embodiment of the present invention, the machine learning model may be a generative model.

In the second embodiment of the present invention, the training of the machine learning model may include training, by the system, an encoder included in the machine learning model using the second range image and the second reflectance image as training data, and training, by the system, a decoder included in the machine learning model so that a reconstruction loss between an output of the decoder and the second noise region boundary image is reduced by fixing the trained encoder and using the second range image, the second reflectance image, and the second noise region boundary image as training data.

According to a third embodiment of the present invention, there is provided a LiDAR sensor noise elimination system including a memory that stores computer-readable instructions, and at least one processor configured to execute the instructions.

The at least one processor is configured to execute the instructions to receive a first point cloud containing noise from a LiDAR sensor, generate a first range image and a first reflectance image based on the first point cloud, generate a two-dimensional first noise region boundary image by inputting the first range image and the first reflectance image into a pre-trained machine learning model, and eliminate noise contained in the first point cloud using the first noise region boundary image.

In the third embodiment of the present invention, the at least one processor may be configured to estimate reflectance of each point contained in the first point cloud using an impulse response of a single beam output of the LiDAR sensor, coordinates of the first point cloud, and adaptive parameters reflecting a backscattering effect and generate the first reflectance image based on the reflectance.

In the third embodiment of the present invention, the at least one processor may be configured to increase reflectance of a point whose z coordinate is a negative number among the first point cloud by applying a predetermined weight to the reflectance.

In the third embodiment of the present invention, the at least one processor may be configured to generate a second range image and a second reflectance image based on a previously collected second point cloud in which a noise label is assigned to a noise point, generate a third range image by eliminating the noise point assigned the noise label from the second range image and generate a second noise region boundary image by multiplying the third range image by a constant of 1 or less, and train the machine learning model using the second range image, the second reflectance image, and the second noise region boundary image as training data.

BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

FIG. 1 is a diagram showing a principle of driving a LiDAR sensor and generating noise;
FIG. 2 is a diagram for describing a LiDAR sensor noise elimination method according to an embodiment of the present invention;
FIG. 3 is an exemplary diagram of training data;
FIG. 4 is a flowchart for describing a method of generating a noise region boundary image according to an embodiment of the present invention;
FIGS. 5A and 5B are diagrams for describing a generative model training method according to an embodiment of the present invention;

FIG. 6 is a block diagram showing a configuration of a LiDAR sensor noise elimination system according to an embodiment of the present invention;

FIG. 7 is a flowchart for describing an operating method of a LiDAR sensor noise elimination system according to an embodiment of the present invention; and

FIG. 8 is a flowchart for describing an operating method of a LiDAR sensor noise elimination system according to an embodiment of the present invention.

## DETAILED DESCRIPTION OF EXEMPLARY EMBODIMENTS

The list of references of the present invention is as follows [1] to [10]. In this specification, each reference or methodology proposed in each reference may be referred to by a number assigned to each reference as follows. The entire contents of reference [5] are incorporated herein by reference.

[1] Charron, Nicholas, Stephen Phillips, and Steven L. Waslander. "Denoising of LiDAR point clouds corrupted by snowfall." 2018 15th Conference on Computer and Robot Vision (CRV). IEEE, 2018.

[2] Kurup, Akhil, and Jeremy Bos. "Dsor: A scalable statistical filter for eliminating falling snow from LiDAR point clouds in severe winter weather." arXiv preprint arXiv:2109.07078 (2021).

[3] Heinzler, Robin, et al. "Cnn-based LiDAR point cloud de-noising in adverse weather." IEEE Robotics and Automation Letters 5.2 (2020): 2514-2521.

[4] Seppanen, Alvari, Risto Ojala, and Kari Tammi. "4denoisenet: Adverse weather denoising from adjacent point clouds." IEEE Robotics and Automation Letters 8.1 (2022): 456-463.

[5] Han, Seung-Jun, et al. "RGOR: De-noising of LiDAR point clouds with reflectance restoration in adverse weather." 2023 International Conference on Information and Communication Technology Convergence (ICTC). IEEE, 2023.

[6] He, Kaiming, Jian Sun, and Xiaoou Tang. "Guided image filtering." IEEE transactions on pattern analysis and machine intelligence 35.6 (2012): 1397-1409.

[7] Kilic, Velat, et al. "Lidar light scattering augmentation (lisa): Physics-based simulation of adverse weather conditions for 3d object detection." arXiv preprint arXiv:2107.07004 (2021).

[8] Hahner, Martin, et al. "Lidar snowfall simulation for robust 3d object detection." Proceedings of the IEEE/CVF Conference on Computer Vision and Pattern Recognition. 2022.

[9] Hahner, Martin, et al. "Fog simulation on real LiDAR point clouds for three-dimensional object detection in adverse weather." Proceedings of the IEEE/CVF International Conference on Computer Vision. 2021.

[10] Kingma, Diederik P., and Max Welling. "Auto-encoding variational bayes." arXiv preprint arXiv:1312.6114 (2013).

The present invention relates to a system for eliminating noise of a light detection and ranging (LiDAR) sensor caused by an adverse weather environment and operating method thereof. This specification describes a method of generating a region where noise occurs as a generative model and generating the noise, rather than a classification method through semantic segmentation of each point. The present invention has the characteristics that computations are processed in a two-dimensional area rather than a three-dimensional area, and that a region where noise is present is roughly generated, rather than classifying individual points. Therefore, the present invention has the advantage of being able to be performed with a simple network and allowing computations to be performed very quickly.

Advantages and features of the present invention and methods for achieving them will be made clear from embodiments described in detail below with reference to the accompanying drawings. However, the present invention is not limited to the embodiments disclosed below and may be implemented in various different forms. These embodiments are merely provided so that this disclosure will be thorough and complete and will fully convey the scope of the present invention to those of ordinary skill in the technical field to which the present invention pertains, and the present invention is only defined by the scope of the claims. Meanwhile, terms used herein are for the purpose of describing the embodiments and are not intended to limit the present invention. As used herein, the singular forms also include the plural forms as well unless specifically stated otherwise in the context. The terms "comprise" and/or "comprising" used herein do not preclude the presence or addition of one or more other components, steps, operations and/or elements in addition to the mentioned components, steps, operations and/or elements.

The terms first, second, etc. may be used to describe various components, but the components should not be limited by the terms. The terms may be used to distinguish a component from another component. For example, without departing from the scope of the present invention, a first component may be named a second component, and similarly, a second component may also be named a first component.

When a component is referred to as being "coupled" or "connected" to another component, it should be understood that the component may be directly coupled or connected to the other component, but there may also be other components disposed therebetween. On the other hand, when a component is referred to as being "directly coupled" or "directly connected" to another component, it should be understood that there are no other components disposed therebetween. Other expressions that describe the relationship between components, such as "between" and "directly between" or "adjacent to" and "directly adjacent to," should be interpreted in the same way.

In describing the present invention, when it is determined that a detailed description of related known technologies may unnecessarily obscure the gist of the present invention, the detailed description will be omitted.

Hereinafter, embodiments of the present invention will be described in detail with reference to the accompanying drawings. In order to facilitate overall understanding in describing the present invention, the same reference numbers will be used for the same means regardless of the drawing numbers.

## 1. Motivation of the invention

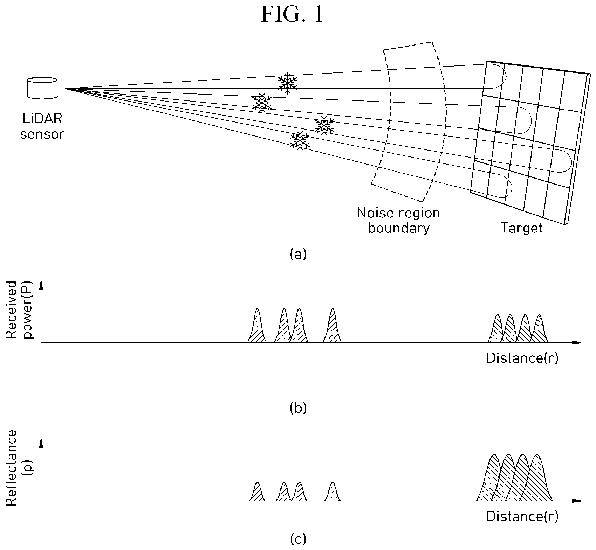

FIG. 1 is a diagram showing a principle of driving a LiDAR sensor and generating noise. In order to describe the motivation of the present invention, the principle of generating noise in a process of operating the LiDAR sensor will be described with reference to FIG. 1.

As shown in FIG. 1A, a laser beam of the LiDAR sensor is emitted from a transmitter of the LiDAR sensor, passes through the atmosphere, is reflected from an object, and returns to a receiver of the LiDAR sensor. In this process, when fine particles such as snow, rain, and fog are present in the atmosphere, these fine particles may cause noise.

FIG. 1B shows received power measured by an actual sensor. The fine particles are detected when received power generated by the fine particles is greater than received power generated by the object. The received power generated by the fine particles is determined by the size, scattering characteristics, the degree of overlap with the laser beam, the distance from a light source of the fine particles, etc. The received power (the magnitude of the received power) is called the reception intensity, and the magnitude of the received power is a value that can be obtained from an actual sensor. Since the laser beam has a cone shape, the closer the laser beam is to the light source, the greater the energy of the laser beam, and the greater the overlap with fine particles. Therefore, fine particles close to the sensor are mainly detected, and fine particles close to an object having a large reflective surface are hardly detected.

Meanwhile, as shown in FIG. 1C, the reflectance of the fine particles or object shows characteristics that are quite different from the received power measured by the sensor. Even when the received power of fine particles is strong and detected as noise, the fine particles are small in size and reflectance thereof is actually very small. Fine particles such as snow, rain, and fog are non-metallic substances, and thus reflectance thereof is lower than that of metallic substances. For example, most of the floating particles in the air are moisture, and the moisture has relatively low reflectance compared to structures on the roadside or other vehicles traveling on the road.

As described so far, based on the characteristic that noise is only generated close to the sensor and the actual reflectance thereof is very small, when a boundary region between noise and the object is found, points inside this boundary region may be assumed as noise and eliminated, the noise can be easily eliminated by assuming that points inside this boundary region are noise and eliminating the points.

In order to provide a method for realizing this concept, the present invention provides a method of estimating reflectance, a method of generating training data generation method of training a generative model for generating a boundary region between noise and an object, and a training method of the generative model.

The present invention adopts a method of roughly generating a region where noise is present rather than classifying individual points, and thus may be implemented as a lightweight network and has very fast operating performance.

## 2. Summary of the invention

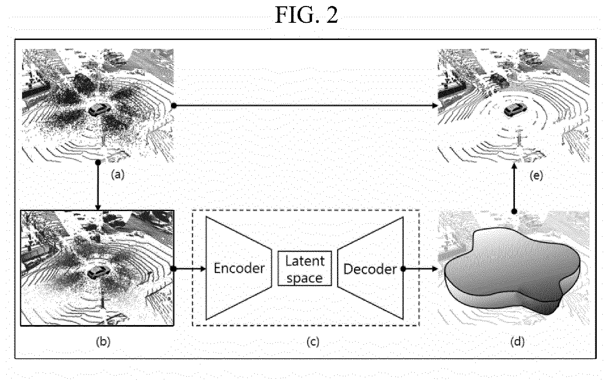

FIG. 2 is a diagram for describing a LiDAR sensor noise elimination method according to an embodiment of the present invention. FIG. 2 shows the entire process proposed by the present invention.

The method may be included in an operating method of a LiDAR sensor noise elimination system according to an embodiment of the present invention. That is, the LiDAR sensor noise elimination method may be performed by a LiDAR sensor noise elimination system 1000.

FIG. 2A shows a point cloud containing noise measured by a LiDAR sensor. For example, noise may be caused by adverse weather.

FIG. 2B shows a point cloud with restored reflectance. In the LiDAR sensor noise elimination method, in order to better classify fine floating particles in the point cloud, reflectance of each point is restored, and received intensity of the LiDAR sensor is replaced with the restored reflectance. FIG. 2B shows an image in which the color of each pixel is expressed differently according to a value of the reflectance corresponding to each pixel. The reflectance has a value greater than or equal to 0 and less than or equal to 1. For example, according to the JET color code, a pixel corresponding to the reflectance of 0 is expressed in blue, and a pixel corresponding to the reflectance of 1 is expressed in red.

FIG. 2C shows a generative model for noise boundary determination. The generative model is a model for determining a boundary of a region where noise is formed within the point cloud.

FIG. 2D shows a boundary region of noise. In the LiDAR sensor noise elimination method, a range image, which is a two-dimensional representation of a three-dimensional point cloud, is used for fast processing of the point cloud and the boundary region. That is, in the LiDAR sensor noise elimination method, the boundary region of noise is generated using a two-dimensional image.

FIG. 2E shows a point cloud from which noise has been eliminated. In the LiDAR sensor noise elimination method, a clear point cloud is ultimately obtained by eliminating points present within the noise boundary region.

### 3. Reflectance restoration method

The point cloud with restored reflectance has been described with reference to FIG. 2B. The reflectance restoration method according to the present invention will be described below.

The LiDAR sensor measures two scalar values for the strongest reflection, that is, a distance r, which is calculated in time, and an intensity $\mu$, which is the magnitude of received power P(r). The received power P(r) is a function of distance or time, and a simple mathematical model for the received power of a single laser beam is as shown in Equation 1.

[Equation 1]

$$\mathrm{P}(r) = \mathrm{KG}(r)\beta(r)\mathrm{T}(r)$$

In Equation 1, K is a constant representing the performance of the LiDAR sensor. K may be set differently depending on the laser wavelength or intensity of the LiDAR sensor. G(r) is a geometric element, and is defined as G(r) =O(r)/$r^2$. Here, O(r)E[0,1] is the degree of overlap between the beam and a laser detector. O(r) converges to 1 when the proximity detection performance works over a certain distance. $\beta$(r) represents a backscattering effect and is affected by the particle size and laser wavelength. T(r), which is the last term of Equation 1, refers to transmittance, and may be expressed as T(r)=exp(-2$\alpha$r). Here, $\alpha$ is an extinction coefficient and generally has a small value. Therefore, the transmittance T(r) approaches 1 at a short distance.

An impulse response R(r) of a single beam, which is an output of an actual LiDAR sensor, may be expressed as Equation 2.

[Equation 2]

$$\mathrm{R}(r) = \mathrm{P}(r)\rho\delta(r - r_t)$$

In Equation 2, $\rho$ is the reflectance of the object and $\delta$ is the Dirac delta function. $r_t$ represents the distance at time t.

The reflectance (restored reflectance) $\rho$ may be calculated as in Equation 3 based on Equations 1 and 2.

[Equation 3]

$$\rho = \frac{R(r)}{P(r)} = \frac{R(r)}{KG(r)\beta(r)T(r)}$$

When the distance of the object is r, the energy measured as the impulse response R(r) may be expressed as the intensity $\mu$, which is a scalar value, and the distance may be defined as r=$(x^2+y^2+z^2)^{1/2}$. In Equation 3, K is a constant, and it may be assumed that G(r)=1/$r^2$ over a certain distance (e.g., tens of cm) and T(r)=1 for a short distance (e.g., several tens of m), the reflectance $\rho$ of Equation 3 may be simplified as in Equation 4.

[Equation 4]

$$\rho \cong \frac{R(r)r^2}{K\beta(r)} = \frac{\mu r^2}{\gamma} = \frac{\mu(x^2+y^2+z^2)}{\gamma}$$

In Equation 4, the intensity $\mu$ is generally a quantized positive value. When a value of the intensity $\mu$ is 0, a small constant should be added to the intensity $\mu$ and normalized so that the intensity $\mu$ is not ignored. $\gamma$=K$\beta$($\tau$) is a constant related to the performance of the LiDAR sensor and a particle size. $\gamma$ is an adaptive parameter (hyperparameter) that varies depending on the type of sensor and particles (fog, rain, snow, etc.).

For the point cloud collected from the LiDAR sensor mounted on a vehicle, a negative range of the z-axis coordinate is limited to a road surface. That is, since the origin of the coordinates (x, y, z) of points included in the point cloud is the location of the LiDAR sensor (which may be installed on the roof of the vehicle, for example), among points whose z-axis coordinate is a negative number, the point having the largest absolute value of the z-axis coordinate is the point on the road surface. Based on the LiDAR sensor, data exists only up to the road surface in the downward direction (-z). Therefore, efficiency can be improved by introducing a weight $\kappa$ to the z-axis as in Equation 5.

[Equation 5]

$$\hat{\rho} = \frac{\mu(x^2 + y^2 + \max(-\kappa z, z)^2)}{\gamma}$$

In Equation 5, $\hat{\rho}$ is the corrected reflectance. In Equation 5, $\kappa$ is a weight and may be set to a value between 10 and 15. $\kappa$ is a ratio of a height from the road surface to the sensor (approximately 2 m) to a distance within which many particles are detected (approximately 25 m). Although $\kappa$ is not a sensitive value, it increases the efficiency of handling the road surface. That is, when the weight $\kappa$ is a positive constant of 1 or more, the effect of a measured point moving $\kappa$ times further away in the downward direction (-z) of the LiDAR sensor, and thus there is an advantage in that the road surface and floating particles are easily distinguished with the reflectance only.

#### 4. Training data generation method

In the present invention, a noise boundary region (or a noise boundary region image) is generated using a trained generative model. In order to train a generative model for generating the noise boundary region, a range image TD1, a reflectance image TD3, and a noise boundary region image TD5 corresponding thereto are used as training data. The method of generating training data will be described below.

#### 4.1 Range image and Reflectance image

It is very difficult to generate a three-dimensional point cloud using the generative model. Therefore, in order to simplify the problem, it is desirable to convert the three-dimensional point cloud into the two-dimensional range image TD1. First, an azimuth angle and elevation angle for the coordinates of each point included in each three-dimensional point cloud are obtained, and the azimuth angle and the elevation angle are quantized to correspond to the horizontal and vertical axes of the image, respectively, to obtain image coordinates of the two-dimensional range image TD1 for each point. Then, a distance of a point corresponding to the coordinates of the range image TD1 is expressed as a color code to obtain the two-dimensional range image TD1. A distance r between the LiDAR sensor and the point (i.e., the distance of the point), an azimuth angle $\theta_{az}$, and an elevation angle $\theta_{el}$ are defined as in Equations 6 to 8.

[Equation 6]

$$r = \sqrt{x^2 + y^2 + z^2}$$

[Equation 7]

$$\theta_{az} = \arctan2(y, x)$$

[Equation 8]

$$\theta_{el} = \arctan\left(\frac{z}{\sqrt{x^2 + y^2}}\right)$$

The LiDAR sensor provides the azimuth $\theta_{az}$ and elevation $\theta_{el}$ along with the distance r and intensity $\mu$ information for each measured point. Therefore, when data collected from the LiDAR sensor is directly used, the range image TD1 may be obtained more easily.

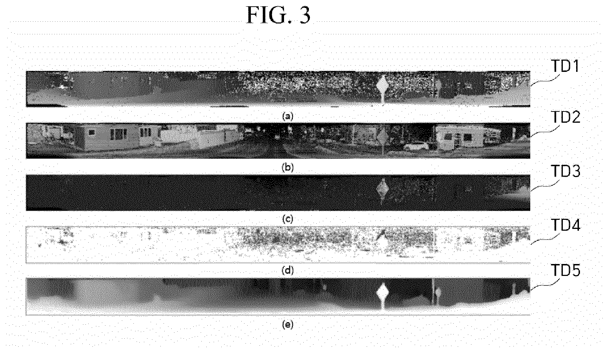

FIG. 3 is an exemplary diagram of training data and is an example of training data for a snowy situation.

FIG. 3A is an example of the range image TD1, in which the distance r is expressed as a color code to increase visibility, and only the $\pm\pi/2$ area of the azimuth $\theta_{az}$ is shown. The azimuth area of the real range image TD1 is $\pm\pi$.

FIG. 3B is an image TD2, which is an intensity image, generated using the reflection intensity $\mu$, which is the output of the LiDAR sensor, in the same manner as generating the range image TD1. FIG. 3C is an image TD3, which is a reflectance image, generated using the reflectance $\rho$ or $\hat{\rho}$ in the same manner as generating the range image TD1. In addition, FIG. 3D is an image TD4, which is a noise label image, generated by labeling a snowflake as noise in the same manner as generating the range image TD1. Looking at of FIGS. 3B, 3C, and 3D, it can be seen that the reflection intensity $\mu$, which is the data collected by the LiDAR sensor, is not useful for distinguishing noise, but noise is clearly distinguished when comparing the use of the reflectance $\rho$ with the use of noise label. Specifically, since the points labeled as noise in FIG. 3D are displayed in a different color from the object in FIG. 3C, the reflectance image TD3 is useful information for distinguishing noise points from object points.

Therefore, in the present invention, the range image TD1 and the reflectance image TD3 are used as the first training data. The range image TD1 and the reflectance image TD3 may be automatically generated by simply collecting data through the LiDAR sensor. Therefore, a large number of range images TD1 and reflectance images TD3 may be generated and used for training an encoder of the generative model.

For reference, in the example of FIG. 3, pieces of actual data in FIGS. 3A to 3E are all 1-channel real numbers. When creating these pieces of actual data, these pieces of actual data were created by mapping each piece of data to the same image coordinates. The example of FIG. 3 is an image representation of such actual data, and each image is expressed with a color code appropriate for the range and characteristics of each data.

In the images TD1 and TD5 of FIGS. 3A and 3E, the distance is expressed with a color. In FIGS. 3A and 3E, each distance data is mapped to the same image coordinates, and the color code used in "Stereo Evaluation" (https://www.cvlibs.net/datasets/kitti/eval_stereo_flow.php?benchmark=stereo) of "KITTI Vision Benchmark Suite" was used. The colors were arranged in the order of white, green, red, and blue from close distance to far distance.

FIG. 3B is a reflection intensity image (an intensity image) TD2 expressed in grayscale. The value of each pixel was expressed as 8 bits (0 to 255).

In the reflectance image TD3 of FIG. 3C, the reflectance corresponding to each pixel has a value greater than or equal to 0 and less than or equal to 1. In the example of FIG. 3C, the JET color code was used, and the reflectance image TD3 was expressed as blue when the reflectance was close to 0, and red when the reflectance was close to 1.

In the noise label image TD4 of FIG. 3D, each pixel corresponds to binary data indicating whether noise is present. The noise label image TD4 was expressed as white (not noise) when the reflectance was 0, and red (noise) when the reflectance was 1.

### 4.2 Noise region boundary image

The second training data required for generating the noise boundary region in the present invention is the noise region boundary image TD5 illustrated in FIG. 3E.

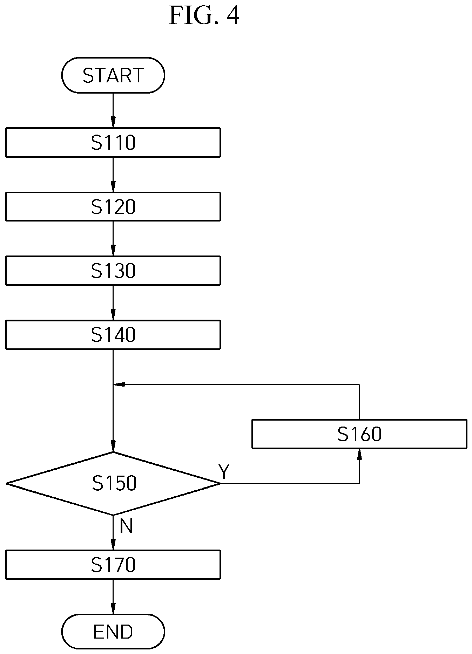

FIG. 4 is a flowchart for describing a method of generating the noise region boundary image TD5 according to an embodiment of the present invention. The above method may be performed by the LiDAR sensor noise elimination system 1000.

First, the LiDAR sensor noise elimination system 1000 receives a point cloud (S110). Then, the LiDAR sensor noise elimination system 1000 eliminates points labeled as noise from the point cloud and generates a two-dimensional range image using the azimuth, elevation, and distance of the remaining points (S 120). Then, the LiDAR sensor noise elimination system 1000 fills an empty region where the points labeled as noise are eliminated with values of g points on the periphery thereof (S130). That is, the values of the points corresponding to the empty region are determined through interpolation using the points on the periphery thereof. The range of the surrounding points of the points corresponding to the empty region depends on the setting. Then, the LiDAR sensor noise elimination system 1000 corrects the range image generated in operation S130 by providing a margin so that points other than noise are not included within the noise boundary region (S140). Specifically, the LiDAR sensor noise elimination system 1000 may correct the range image by multiplying the range image generated in operation S130 by a correction constant of 1 or less. For example, the correction constant may be selected from a value from 0.8 to 0.9. Then, the LiDAR sensor noise elimination system 1000 projects the point corresponding to the noise onto the corrected range image to check whether interference occurs (S150). When interference occurs despite the correction (for example, when a noise point is present at a distance farther than the corrected range image), the range image is re-corrected with a median value between the value before correction and the noise in the range image (S160). In this case, the range of recorrection includes the periphery of the point where interference occurred (interference point), and the range of the periphery of the interference point is determined according to the settings. When it is confirmed that no interference occurs in operation S150, edge-preserving smoothing or edge-aware smoothing is performed on the corrected range image to prevent the boundary of the range image from being damaged to generate the noise region boundary image TD5. To this end, the LiDAR sensor noise elimination system 1000 may use "Guided image filtering" of [6].

### 4.3 Use of weather simulator

Noise labels are needed to generate a noise boundary region. Creating noise labels for a large enough number of three-dimensional points to train a deep learning network is a very difficult problem. Therefore, it is desirable to use a weather simulator for generating noise labels. As a weather simulator for the LiDAR sensor, any one of the weather simulators of LiDAR light scattering augmentation (LISA) [7], LiDAR snowfall simulation (SnowSim) [8], and Fog simulation on real LiDAR point clouds (FogSim) [9] or a combination thereof may be used. LISA is suitable for generating noise due to rain, SnowSim is suitable for generating noise due to snow, and FogSim is suitable for generating noise due to fog.

The LiDAR sensor noise elimination system 1000 may automatically generate synthetic data and respective labels for various weather situations by applying a weather simulator to previously collected LiDAR sensor data and use the synthetic data and respective labels as training data. In addition, since the simulator alone cannot perfectly simulate an actual situation, it is desirable to add data labels collected under the actual situation.

### 5. Training of generative model

The LiDAR sensor noise elimination system 1000 according to an embodiment of the present invention uses a generative model to generate a noise region boundary image based on a range image and a reflectance image. In order to increase the computation speed, it is preferable to use a simple and efficient variational autoencoder (VAE) model as the generative model [10].

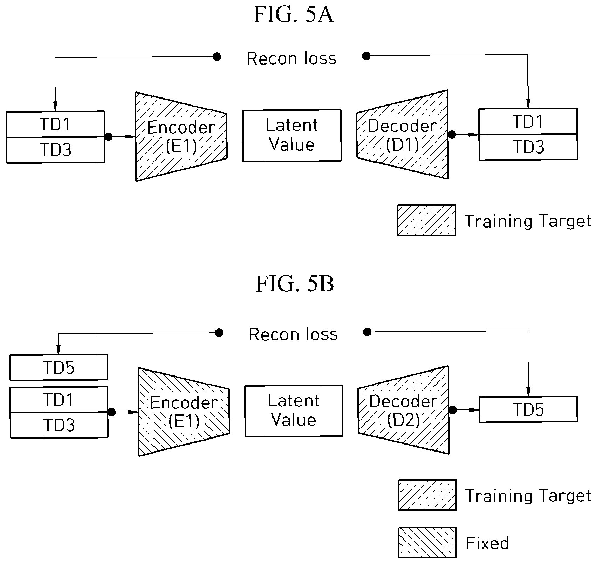

As shown in FIGS. 5A and 5B, generative models generally have a structure in which an encoder converts input data into latent values, and a decoder restores the latent values to original data. In this case, when the latent values have a known distribution, the generative model may stably generate output values even when unlearned inputs are input. Since the latent values of the VAE follow a normal distribution, the VAE is suitable as a structure of the generative model for generating the_noise region boundary image in the present invention.

The present invention provides the following two-stage training method to train the generative model for generating the noise boundary region.

### 5.1 Encoder training

The first stage of the generative model training method according to the present invention is a stage of training the entire generative model using only the range image TD1 and the reflectance image TD3, as shown in FIG. 5A. A training target in this stage is an encoder E1 and a decoder D1, but a decoder used in the final generative model is a decoder D2 trained in the second stage, and thus an actual target to be trained in this stage is the encoder E1.

The range image TD1 and the reflectance image TD3 are created with LiDAR sensor data only without training labels, and thus the range image TD1 and reflectance image TD3 may be prepared simply by collecting data from the LiDAR sensor. That is, the LiDAR sensor noise elimination system 1000 may train the generative model using an unsupervised learning method based on a large amount of data collected through the LiDAR sensor. The LiDAR sensor noise elimination system 1000 inputs the range image TD1 and the reflectance image TD3 to the encoder E1, and the decoder D1 generates a range image TD1 and a reflectance image TD3 again based on the latent values generated by the encoder E1. The LiDAR sensor noise elimination system 1000 trains the generative model (the encoder E1 and decoder D1 thereof) so that a reconstruction loss between inputs TD1 and TD3 and outputs TD1 and TD3 of the generative model is reduced.

In this stage, the LiDAR sensor noise elimination system 1000 may use data collected by a weather simulator and under various weather situations. Through this, the encoder E1 of the generative model may be trained to properly simulate input data as latent values.

### 5.2 Decoder training

The second stage of the generative model training method according to the present invention is a stage of training the generative model to generate the noise boundary region. The training target in this stage is the decoder D2. That is, in this stage, the LiDAR sensor noise elimination system 1000 configures a generative model to be trained by combining a new decoder D2 with a previously trained encoder E1 without using the decoder D1 trained in the first stage.

Meanwhile, since the operating speed of the weather simulator is very slow, it is difficult to generate enough data to train the entire generative model even when the simulator is used, and when a proportion of data generated by the simulator is higher than actual data in the training data, the problem of overfitting may occur. In the first stage, the generative model that simulates the LiDAR sensor data using much data was obtained.

In the second stage, the LiDAR sensor noise elimination system 1000 trains only the decoder D2 that generates the noise region boundary image using relatively less data than in the first stage. As shown in FIG. 5B, the LiDAR sensor noise elimination system 1000 trains only the new decoder D2 while maintaining (fixing) the encoder E1 trained in the first stage. In this case, the LiDAR sensor noise elimination system 1000 inputs the range image TD1 and the reflectance image TD3 into the encoder E1 in the same manner as in the first stage. In addition, the LiDAR sensor noise elimination system 1000 uses the noise region boundary image TD5 corresponding to the range image TD1 and reflectance image TD3 as labels to train the decoder D2 so that the reconstruction loss between the output of the generative model and the noise region boundary image TD5 is reduced.

## 6. Noise elimination method

Finally, a method of eliminating noise from LiDAR sensor data in real time in an autonomous vehicle will be described. First, the LiDAR sensor noise elimination system 1000 generates a range image and a reflectance image based on LiDAR sensor data collected in real time and inputs the range image and the reflectance image into a previously trained generative model to generate a noise region boundary image. In addition, the LiDAR sensor noise elimination system 1000 considers points closer than a noise boundary region shown in a noise boundary region image among the points included in the point cloud collected through the LiDAR sensor as noise and deletes the points. In this way, the LiDAR sensor noise elimination system 1000 may eliminate noise points from the point cloud collected through the LiDAR sensor to obtain a clear point cloud.

## 7. Lidar sensor noise elimination system and operating method thereof

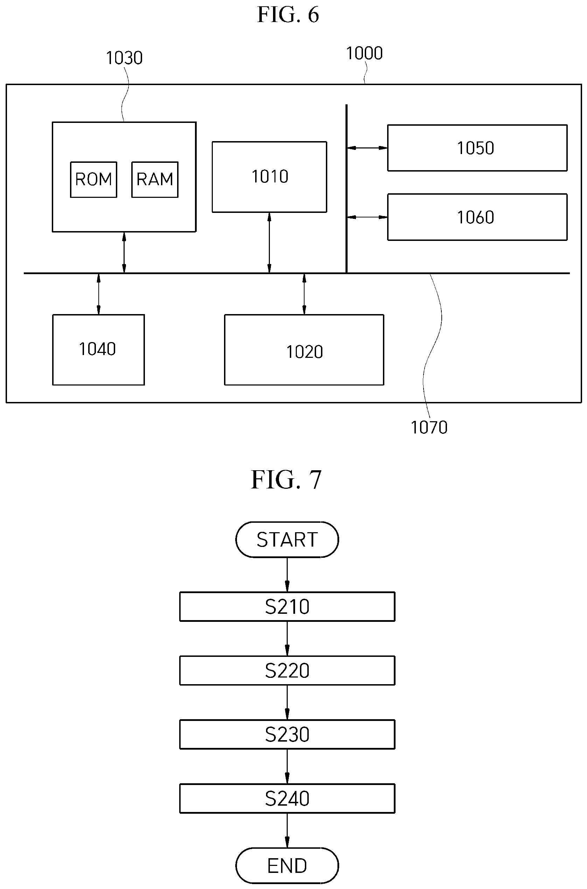

FIG. 6 is a block diagram showing a configuration of a LiDAR sensor noise elimination system according to an embodiment of the present invention. The LiDAR sensor noise elimination system according to an embodiment of the present invention may be implemented in the form of a computer system of FIG. 6.

Referring to FIG. 6, the LiDAR sensor noise elimination system 1000 may include at least one of a processor 1010, a memory 1030, an input interface device 1050, an output interface device 1060, and a storage device 1040 that communicate through a bus 1070. The LiDAR sensor noise elimination system 1000 may also further include a communication device 1020 coupled to a network.

The LiDAR sensor noise elimination system 1000 shown in FIG. 6 is a LiDAR sensor noise elimination system according to an embodiment. The components of the LiDAR sensor noise elimination system 1000 according to the present invention are not limited to those of the embodiment shown in FIG. 6, and some components may be added, changed, or omitted as needed.

The processor 1010 may be a central processing unit (CPU), or a semiconductor device that executes computer-readable instructions stored in the memory 1030 or the storage device 1040. The memory 1030 and the storage device 1040 may include various forms of volatile or nonvolatile storage media. For example, the memory 1030 may include a read only memory (ROM) and a random access memory (RAM). In the embodiment of the present disclosure, the memory 1030 may be located inside or outside the processor 1010, and the memory 1030 may be connected to the processor 1010 through various known method. The memory 1030 may be various forms of volatile or nonvolatile storage media and for example, the memory 1030 may include the ROM or the RAM.

Therefore, the embodiment of the present invention may be implemented as a method implemented in a computer, or as a non-transitory computer-readable medium in which computer-executable instructions are stored. In an embodiment, when executed by the processor 1010, the computer-readable instructions may perform a method according to at least one aspect of the present disclosure.

The communication device 1020 may transmit or receive a wired signal or a wireless signal.

In addition, the operating method of the LiDAR sensor noise elimination system according to the embodiment of the present invention may be implemented in the form of program instructions that can be executed through various computer means and may be recorded on a computer-readable medium.

The computer-readable medium may include program instructions, data files, data structures, etc., alone or in combination. The program instructions recorded on the computer-readable medium may be specially designed and configured for the embodiment of the present invention or may be known to and usable by those skilled in the art of computer software. The computer-readable recording medium may include a hardware device configured to store and execute program instructions. For example, the computer-readable recording medium may be a magnetic media such as a hard disk, a floppy disk, and a magnetic tape, an optical media such as a compact disk-read only memory (CD-ROM), a digital versatile disc (DVD), a magneto-optical media such as a floptical disk, a ROM, a RAM, a flash memory, etc. The program instructions may include machine language code, such as that produced by a compiler, as well as high-level language code that can be executed by a computer through an interpreter or the like.

The processor 1010 is configured to execute computer-readable instructions stored in the memory 1030 or the storage device 1040 to receive a first point cloud containing noise from a LiDAR sensor, generate a two-dimensional first range image and a two-dimensional first reflectance image based on the first point cloud, generate a first noise region boundary image by inputting the first range image and the first reflectance image into a pre-trained machine learning model, and eliminate noise contained in the first point cloud using the first noise region boundary image.

The processor 1010 may be configured to estimate reflectance of each point contained in the first point cloud using an impulse response of a single beam output of the LiDAR sensor, coordinates of the first point cloud, and adaptive parameters reflecting a backscattering effect and generate the first reflectance image based on the reflectance.

The processor 1010 may be configured to increase reflectance of a point whose z coordinate is a negative number among the first point cloud by applying a predetermined weight to the reflectance.

The processor 1010 may be configured to generate a second range image and a second reflectance image based on a previously collected second point cloud in which a noise label is assigned to a noise point, generate a third range image by eliminating the noise point assigned the noise label from the second range image, and generate a second noise region boundary image by multiplying the third range image by a constant of 1 or less, and train the machine learning model using the second range image, the second reflectance image, and the second noise region boundary image as training data.

The machine learning model may be a VAE-based generative model.

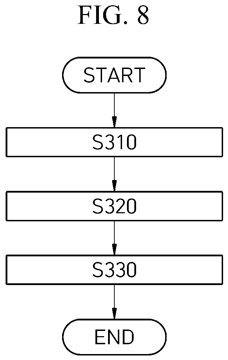

FIGS. 7 and 8 are flowcharts for describing an operating method of a LiDAR sensor noise elimination system according to an embodiment of the present invention. Specifically, FIG. 7 is a flowchart of a LiDAR sensor noise elimination method included in the operating method, and FIG. 8 is a flowchart of a generative model training method included in the operating method.

Referring to FIG. 7, the LiDAR sensor noise elimination method according to an embodiment of the present invention includes operations S210 to S240. The LiDAR sensor noise elimination method shown in FIG. 7 is a LiDAR sensor noise elimination method according to an embodiment, and operations of the LiDAR sensor noise elimination method according to the present invention are not limited to those of the embodiment shown in FIG. 7, and some operations may be added, changed, or omitted as needed.

Operation S210 is an operation of receiving a point cloud.

The processor 1010 receives a first point cloud containing noise from a LiDAR sensor.

Operation S220 is an operation of generating a reflectance image.

The processor 1010 generates a two-dimensional first range image TD1 and a two-dimensional first reflectance image TD3 based on the first point cloud. Since the range image and the reflectance image have been described above, the description thereof will be omitted.

In this operation, the processor 1010 may estimate reflectance of each point contained in the first point cloud using an impulse response of a single beam output of the LiDAR sensor, coordinates of the first point cloud, and adaptive parameters reflecting a backscattering effect and generate the first reflectance image TD3 based on the reflectance.

The processor 1010 may increase reflectance of a point whose z coordinate is a negative number among the first point cloud by applying a predetermined weight to the reflectance in the process of generating the first range image TD1 and the first reflectance image TD3.

Operation S230 is an operation of generating a noise region boundary image.

The processor 1010 generates a two-dimensional first noise region boundary image TD5 by inputting the first range image TD1 and the first reflectance image TD3 into a pre-trained machine learning model (e.g., a VAE which is one of generative models). Since the noise region boundary image and generation method thereof have been described above with reference to FIG. 4 and the like, the description thereof will be omitted.

Operation S240 is an operation of eliminating noise contained in the point cloud.

The processor 1010 eliminates noise included in the first point cloud using the first noise region boundary image TD5.

Hereinafter, with reference to FIG. 8, the training method of the generative model for generating the noise region boundary image will be described. The generative model is a machine learning-based model. As described above, the training method is included in the operating method of the LiDAR sensor noise elimination system 1000.

The training method of the generative model shown in FIG. 8 may be performed before the LiDAR sensor noise elimination method shown in FIG. 7 or may be performed with the LiDAR sensor noise elimination method in parallel.

Referring to FIG. 8, the training method of the generative model according to an embodiment of the present invention includes operations S310 to S330. The training method of the generative model shown in FIG. 8 is a training method of a generative model according to an embodiment, and operations of the training method of the generative model according to the present invention are not limited to those of the embodiment shown in FIG. 8, and some operations may be added, changed, or omitted as needed.

Operation S310 is an operation of generating a range image and a reflectance image from among training data for training a machine learning model.

The processor 1010 generates a second range image TD1 and a second reflectance image TD3 based on a previously collected second point cloud in which a noise label is assigned to a noise point. Since the range image and reflectance image have been described above, the description thereof will be omitted.

Prior to performing operation S310, the processor 1010 may generate the noise points and the noise labels assigned to the noise points using a previously constructed weather simulator. The weather simulator may include any one of LISA, SnowSim, and FogSim, or a combination thereof.

Operation S320 is an operation of generating a noise region boundary image from among the training data for training the machine learning model.

The processor 1010 generates a third range image by eliminating the noise point assigned the noise label from the second range image TD1 and generate a second noise region boundary image TD5 by multiplying the third range image by a constant of 1 or less.

The processor 1010 may correct the second noise region boundary image TD5 when a noise point whose distance is greater than that of a noise boundary region shown in the second noise region boundary image TD5 is present so that a distance of a point of the noise boundary region corresponding to the noise point whose distance is greater than that of the noise boundary region becomes greater than that of the noise point whose distance is greater than that of the noise boundary region.

The processor 1010 may perform edge-preserving smoothing on the generated or corrected second noise region boundary image TD5.

Operation S330 is an operation of training the machine learning model using the training data generated in the previous operation.

The processor 1010 trains the machine learning model using the second range image TD1, the second reflectance image TD3, and the second noise region boundary image TD5 as training data. The machine learning model may be a VAE-based generative model.

In this operation S330, the processor 1010 trains an encoder E1 and decoder D1 included in the machine learning model using the second range image TD1 and the second reflectance image TD3 as training data. In addition, the processor 1010 replaces the decoder D1 with a new decoder D2 in the machine learning model. In addition, the processor 1010 trains a decoder D2 newly included in the machine learning model so that a reconstruction loss between an output of the decoder D2 and the second noise region boundary image TD5 is reduced by fixing the encoder E1 previously trained in the machine learning model and using the second range image TD1, the second reflectance image TD3, and the second noise region boundary image TD5 as training data.

The operating method of the LiDAR sensor noise elimination system has been described with reference to the flowcharts shown in FIGS. 7 and 8. For the sake of simplicity, the operating method has been illustrated as a series of blocks and described as above, but the present invention is not limited to the order of the blocks, and some blocks may be processed in a different order or simultaneously with other blocks illustrated and described in this specification, and various other branches, flow paths, and block orders that achieve the same or similar results may be implemented. In addition, not all of the illustrated blocks may be needed for the implementation of the operating method.

Meanwhile, in the description with reference to FIGS. 7 and 8, each operation may be further divided into additional operations or combined with sub-operations depending on the implementation example of the present invention. In addition, some operations may be omitted as needed, and the order between the operations may be changed. In addition, even when other omitted content is present, the contents of FIGS. 1 to 5B (1. Motivation of the invention to 6. Noise elimination method) may be applied to the contents of FIGS. 6 to 8. Also, the contents of FIGS. 6 to 8 may be applied to the contents of FIGS. 1 to 5B (1. Motivation of the invention to 6. Noise elimination method).

The advantages of the present invention are as follows.

1. The present invention proposes a new method of generating a noise boundary region, which is a region where noise is present, and determining the noise boundary region rather than determining individual points to eliminate noise from a point cloud of the LiDAR.

2. In the present invention, the noise boundary region is represented as a two-dimensional image, not a three-dimensional space, and detailed determination is not required compared to a technology that processes individual point. Accordingly, in the present invention, a network structure can be simply implemented, and very fast operating speed is achieved compared to existing technologies. This is a very important factor in the application of autonomous vehicles.

3. The present invention proposes a method of numerically analyzing a method of restoring reflectance to determine the noise boundary region. The present invention exhibits significantly improved performance in classifying noise compared to classifying noise using reception intensity, which is an input of a sensor.

4. The present invention proposes a training data generation method and model training method for a generative model that generates a noise boundary region. The present invention provides a method of efficiently training a network by performing unsupervised and supervised learning in parallel even without much label data.

The effects that can be obtained from the present invention are not limited to the effects mentioned above, and other effects that are not mentioned will be clearly understood by those skilled in the art to which the present invention belongs from the description below.

Although the present invention has been described above with reference to exemplary embodiments thereof, those skilled in the art will understand that various modifications and changes may be made to the present invention without departing from the spirit and scope of the present invention as set forth in the claims below.

**Claims**

1. An operating method of a light detection and ranging (LiDAR) sensor noise elimination system, comprising:

   operation (a) of receiving, by the system, a first point cloud containing noise from a LiDAR sensor;
   operation (b) of generating, by the system, a two-dimensional first range image and a two-dimensional first reflectance image based on the first point cloud;
   operation (c) of generating, by the system, a two-dimensional first noise region boundary image by inputting the first range image and the first reflectance image into a pre-trained machine learning model; and
   operation (d) of eliminating, by the system, noise contained in the first point cloud using the first noise region boundary image.

2. The operating method of claim 1, wherein the operation (b) includes estimating, by the system, reflectance of each point contained in the first point cloud using an impulse response of a single beam output of the LiDAR sensor, coordinates of the first point cloud, and adaptive parameters reflecting a backscattering effect and generating the first reflectance image based on the reflectance.

3. The operating method of claim 2, wherein the operation (b) includes increasing, by the system, reflectance of a point whose z coordinate is a negative number among the first point cloud by applying a predetermined weight to the reflectance.

4. The operating method of one of claims 1 to 3, further comprising:

   operation (e) of generating, by the system, a second range image and a second reflectance image based on a previously collected second point cloud in which a noise label is assigned to a noise point;
   operation (f) of generating, by the system, a third range image by eliminating the noise point assigned the noise label from the second range image, and generating a second noise region boundary image by multiplying the third range image by a constant of 1 or less; and
   operation (g) of training, by the system, the machine learning model using the second range image, the second reflectance image, and the second noise region boundary image as training data.

5. The operating method of claim 4, wherein the operation (f) further includes correcting, by the system, the second noise region boundary image when a noise point whose distance is greater than that of a noise boundary region shown in the second noise region boundary image is present so that a distance of a point of the noise boundary region corresponding to the noise point whose distance is greater than that of the noise boundary region becomes greater than that of the noise point whose distance is greater than that of the noise boundary region.

6. The operating method of claim 4, wherein the operation (f) includes performing, by the system, edge-preserving smoothing on the second noise region boundary image.

7. The operating method of one of claims 4 to 6, wherein the machine learning model is a generative model.

8. The operating method of claim 7, wherein the operation (g) includes:

   operation (h) of training, by the system, an encoder included in the machine learning model using the second range image and the second reflectance image as training data; and

operation (i) of training, by the system, a decoder included in the machine learning model by fixing the trained encoder and using the second range image, the second reflectance image, and the second noise region boundary image as training data.

9. The operating method of claim 8, wherein the operation (i) includes calculating, by the system, a reconstruction loss between an output of the decoder and the second noise region boundary image and training the decoder so that the reconstruction loss is reduced.

10. The operating method of one of claims 4 to 9, further comprising operation (j) generating, by the system, the noise point and the noise label assigned to the noise point using a pre-built weather simulator.

11. The operating method of claim 10, wherein the weather simulator includes LiDAR light scattering augmentation (LISA), LiDAR snowfall simulation (SnowSim), or Fog simulation on real LiDAR point clouds (FogSim).

12. A light detection and ranging (LiDAR) sensor noise elimination system comprising:

a memory that stores computer-readable instructions; and
at least one processor configured to execute the instructions,
wherein the at least one processor is configured to execute the instructions to:

receive a first point cloud containing noise from a LiDAR sensor;
generate a first range image and a first reflectance image based on the first point cloud;
generate a two-dimensional first noise region boundary image by inputting the first range image and the first reflectance image into a pre-trained machine learning model; and
eliminate noise contained in the first point cloud using the first noise region boundary image.

13. The LiDAR sensor noise elimination system of claim 12, wherein the at least one processor is configured to estimate reflectance of each point contained in the first point cloud using an impulse response of a single beam output of the LiDAR sensor, coordinates of the first point cloud, and adaptive parameters reflecting a backscattering effect and generate the first reflectance image based on the reflectance.

14. The LiDAR sensor noise elimination system of claim 13, wherein the at least one processor is configured to increase reflectance of a point whose z coordinate is a negative number among the first point cloud by applying a predetermined weight to the reflectance.

15. The LiDAR sensor noise elimination system of one of claims 12 to 14, wherein the at least one processor is configured to:

generate a second range image and a second reflectance image based on a previously collected second point cloud in which a noise label is assigned to a noise point;
generate a third range image by eliminating the noise point assigned the noise label from the second range image and generate a second noise region boundary image by multiplying the third range image by a constant of 1 or less; and
train the machine learning model using the second range image, the second reflectance image, and the second noise region boundary image as training data.

## FIG. 1

LiDAR
sensor

Noise region
boundary

Target

(a)

Received power(P)

Distance(r)

(b)

Reflectance (ρ)

Distance(r)

(c)

FIG. 2

(a)
(b)
(c)
Encoder
Latent space
Decoder
(d)
(e)

FIG. 3

(a)  TD1

(b)  TD2

(c)  TD3

(d)  TD4

(e)  TD5

FIG. 4

```
           ┌─────────┐
           │  START  │
           └─────────┘
                │
                ▼
        ┌───────────────┐
        │     S110      │
        └───────────────┘
                │
                ▼
        ┌───────────────┐
        │     S120      │
        └───────────────┘
                │
                ▼
        ┌───────────────┐
        │     S130      │
        └───────────────┘
                │
                ▼
        ┌───────────────┐
        │     S140      │
        └───────────────┘
                │                    ┌──────────────────┐
                │                    │       S160       │
                │                    └──────────────────┘
                │                           ▲
                ▼                           │
           ╱─────────╲        Y            │
          ╱   S150    ╲────────────────────┘
          ╲           ╱
           ╲─────────╱
                │ N
                ▼
        ┌───────────────┐
        │     S170      │
        └───────────────┘
                │
                ▼
           ┌─────────┐
           │   END   │
           └─────────┘
```

FIG. 5A

FIG. 5B

## FIG. 6

## FIG. 7

## FIG. 8

Europäisches
Patentamt

European
Patent Office

Office européen
des brevets

## EUROPEAN SEARCH REPORT

**Application Number**

EP 24 21 8288

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUO ZHEN ET AL: "Semantic Segmentation Based Rain and Fog Filtering Only by LiDAR Point Clouds", 2022 IEEE INTERNATIONAL CONFERENCE ON UNMANNED SYSTEMS (ICUS), IEEE, 28 October 2022 (2022-10-28), pages 90-95, XP034260680, DOI: 10.1109/ICUS55513.2022.9986567 [retrieved on 2022-12-29] * pages 91, 92; figures 3, 5 * | 1-15 | INV. G01S7/487 G01S17/89 G01S17/931 G06N3/08 |
| X | YU MING-YUAN ET AL: "LiSnowNet: Real-time Snow Removal for LiDAR Point Clouds", 2022 IEEE/RSJ INTERNATIONAL CONFERENCE ON INTELLIGENT ROBOTS AND SYSTEMS (IROS), IEEE, 23 October 2022 (2022-10-23), pages 6820-6826, XP034256919, DOI: 10.1109/IROS47612.2022.9982248 [retrieved on 2022-12-26] * page 6822 - page 6824; figures 2(a), 2(b) * | 1,12 | |
| A | HAN SEUNG-JUN ET AL: "RGOR: De-noising of LiDAR point clouds with reflectance restoration in adverse weather", 2023 14TH INTERNATIONAL CONFERENCE ON INFORMATION AND COMMUNICATION TECHNOLOGY CONVERGENCE (ICTC), IEEE, 11 October 2023 (2023-10-11), pages 1844-1849, XP034523118, DOI: 10.1109/ICTC58733.2023.10392388 [retrieved on 2024-01-23] * page 1846, column 1; page 1846, column 2; equations (3), (4) and (5) * | 2,3,13, 14 | **TECHNICAL FIELDS SEARCHED (IPC)** G01S |

-/--

The present search report has been drawn up for all claims

| Place of search | Date of completion of the search | Examiner |
|---|---|---|
| Munich | 16 April 2025 | Kirscher, Jérôme |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.................................................................
& : member of the same patent family, corresponding
   document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 21 8288

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HAHNER MARTIN ET AL: "LiDAR Snowfall Simulation for Robust 3D Object Detection", 2022 IEEE/CVF CONFERENCE ON COMPUTER VISION AND PATTERN RECOGNITION (CVPR), IEEE, 18 June 2022 (2022-06-18), pages 16343-16353, XP034195155, DOI: 10.1109/CVPR52688.2022.01588 [retrieved on 2022-09-27] * page 16346; figure 3 * | 10,11 | |
| A | US 2022/163675 A1 (GOETZ GEORGES [US] ET AL) 26 May 2022 (2022-05-26) * paragraphs [0134], [0136], [0143], [0184]; figure 8 * | 1,12 | |
| A | HAN HAOZHENG ET AL: "Denoising Point Clouds with Intensity and Spatial Features in Rainy Weather", 2023 IEEE INTERNATIONAL CONFERENCE ON IMAGE PROCESSING (ICIP), IEEE, 8 October 2023 (2023-10-08), pages 3015-3019, XP034467486, DOI: 10.1109/ICIP49359.2023.10223164 [retrieved on 2023-09-11] * paragraph [3015]; figures 2, 3 * | 1,12 | **TECHNICAL FIELDS SEARCHED** (IPC) |

The present search report has been drawn up for all claims

| Place of search | Date of completion of the search | Examiner |
|---|---|---|
| Munich | 16 April 2025 | Kirscher, Jérôme |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 8288

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2025

| Patent document cited in search report | Publication date | Patent family member(s) | | Publication date |
|---|---|---|---|---|
| US 2022163675 A1 | 26-05-2022 | EP | 4200635 A1 | 28-06-2023 |
| | | US | 2022163675 A1 | 26-05-2022 |
| | | WO | 2022115288 A1 | 02-06-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230180503
- KR 1020240168624
- KR 1020220122392
- KR 102507068

**Non-patent literature cited in the description**

- De-noising of LiDAR point clouds corrupted by snowfall.. **CHARRON** ; **NICHOLAS** ; **STEPHEN PHILLIPS** ; **STEVEN L. WASLANDER**. 2018 15th Conference on Computer and Robot Vision (CRV). IEEE, 2018
- **KURUP** ; **AKHIL** ; **JEREMY BOS**. Dsor: A scalable statistical filter for eliminating falling snow from LiDAR point clouds in severe winter weather. *arXiv preprint arXiv:2109.07078*, 2021
- **HEINZLER** ; **ROBIN et al.** Cnn-based LiDAR point cloud de-noising in adverse weather. *IEEE Robotics and Automation Letters*, 2020, vol. 5 (2), 2514-2521
- **SEPPANEN** ; **ALVARI** ; **RISTO OJALA** ; **KARI TAMMI**. 4denoisenet: Adverse weather denoising from adjacent point clouds. *IEEE Robotics and Automation Letters*, 2022, vol. 8 (1), 456-463
- Denoising of LiDAR point clouds corrupted by snowfall. **CHARRON** ; **NICHOLAS** ; **STEPHEN PHILLIPS** ; **STEVEN L. WASLANDER**. 2018 15th Conference on Computer and Robot Vision (CRV). IEEE, 2018
- RGOR: De-noising of LiDAR point clouds with reflectance restoration in adverse weather. **HAN** ; **SEUNG-JUN et al.** 2023 International Conference on Information and Communication Technology Convergence (ICTC). IEEE, 2023
- **HE** ; **KAIMING** ; **JIAN SUN** ; **XIAOOU TANG**. Guided image filtering. *IEEE transactions on pattern analysis and machine intelligence*, 2012, vol. 35 (6), 1397-1409
- **KILIC** ; **VELAT et al.** Lidar light scattering augmentation (lisa): Physics-based simulation of adverse weather conditions for 3d object detection. *arXiv preprint arXiv:2107.07004*, 2021
- **HAHNER** ; **MARTIN et al.** Lidar snowfall simulation for robust 3d object detection. *Proceedings of the IEEE/CVF Conference on Computer Vision and Pattern Recognition*, 2022
- **HAHNER** ; **MARTIN et al.** Fog simulation on real LiDAR point clouds for three-dimensional object detection in adverse weather. *Proceedings of the IEEE/CVF International Conference on Computer Vision*, 2021
- **KINGMA** ; **DIEDERIK P.** ; **MAX WELLING**. Auto-encoding variational bayes. *arXiv preprint arXiv:1312.6114*, 2013